# EUROPÄISCHE PATENTSCHRIFT

(11) **EP 3 426 595 B1**
(45) Veröffentlichungstag und Bekanntmachung des Hinweises auf die Patenterteilung: **11.05.2022**
(21) Anmeldenummer: 17708266.6
(22) Anmeldetag: 02.03.2017
(51) Int. Cl.: B67C 3/26, G01F 23/296, G01F 23/2965

(54) **FÜLLELEMENT**
FILLING ELEMENT
ÉLÉMENT DE REMPLISSAGE

(30) Priorität: 08.03.2016 DE 102016104185
(43) Veröffentlichungstag der Anmeldung: 16.01.2019
(73) Patentinhaber: KHS GmbH, 44143 Dortmund (DE)
(72) Erfinder: CLÜSSERATH, Ludwig, 55543 Bad Kreuznach (DE); KRULITSCH, Dieter-Rudolf, 55545 Bad Kreuznach (DE); DAMEROW, Matthias, 55278 Uelversheim (DE)
(86) Internationale Anmeldenummer: PCT/EP2017/054936
(87) Internationale Veröffentlichungsnummer: WO 2017/153256

(56) Entgegenhaltungen:
- EP-A1- 1 571 119
- EP-A1- 2 192 076
- DE-A1- 4 427 086
- DE-A1-102011 056 370

## Beschreibung

Die vorliegende Erfindung betrifft ein Füllelement zum Befüllen von Behältern mit einer Flüssigkeit, insbesondere einem Getränk, welches auch ein CO₂-haltiges Getränk sein kann. Das Füllelement hat einen Füllelementkörper mit einem Produktkanal, in welchem ein Füllventil ausgebildet ist, um das Befüllen eines unter dem Füllelement gehaltenen Behälters zu starten und zu stoppen. Am unteren Ende des Produktkanals ist eine Abgabeöffnung ausgebildet und das Füllelement hat unter der Abgabeöffnung eine Aufnahme für einen Behälter, wie zum Beispiel eine Standfläche, einen Greifer oder eine Hängend-Aufnahme. Des Weiteren hat das Füllelement einen Füllstandssensor, der sich zumindest teilweise vertikal unter die Abgabeöffnung erstreckt, wobei das Füllventil in Abhängigkeit von dem Signal des Füllstandssensors betätigbar ist. Ein derartiges Füllelement ist z.B. aus der DE 10 2011 056 370 A1 bekannt

Die DE 44 27 086 A1 offenbart ein Füllelement und ein Verfahren gemäß den Oberbegriffen der Ansprüche 1 und 19.

Es ist Aufgabe der Erfindung, das oben genannte gattungsgemäße Füllelement derart weiterzuentwickeln, dass eine möglichst gleichmäßige Befüllung eines in dem Füllelement angeordneten Behälters erzielt wird.

Diese Aufgabe wird durch ein Füllelement mit den Merkmalen des Anspruchs 1 gelöst. Vorteilhafte Weiterbildungen der Erfindung sind Gegenstand der abhängigen Ansprüche. Vorteilhafte Weiterbildungen der Erfindung sind auch in der Beschreibung und in den Zeichnungen offenbart.

Der Füllstandssensor weist wenigstens einen Schwingungskörper auf und eine Messeinrichtung, um die Schwingung des Schwingungskörpers zu messen. In dem erfindungsgemäßen Füllstandssensor des Füllelements wird der Schwingungskörper in Schwingung versetzt, z.B. durch die Strömung im Füllstrahl.

Vorzugsweise kann eine, z.B. elektrische, Anregungseinrichtung vorgesehen sein, um den Schwingungskörper in Schwingung zu versetzen. Der Schwingungskörper schwingt mit einer definierten Frequenz, vorzugsweise mit seiner Resonanzfrequenz. Steigt nun der Füllstandspegel in dem Behälter so stark an, dass er das untere Endes des Schwingungskörpers berührt, und eventuell sogar am Schwingungskörper hochsteigt, ändert sich die Schwingungsfrequenz des Schwingungskörpers, was mittels der Messeinrichtung gemessen und mittels einer Auswerteeinrichtung ausgewertet wird, um das Füllventil zu schließen. Die Auswerteeinrichtung kann dem Füllelement oder zentral einer Füllmaschine zugeordnet sein kann, die eine Mehrzahl der oben genannten Füllelemente aufweist.

Diese entweder dem Füllelement oder der Füllmaschine zugeordnete Auswerteeinrichtung hat vorzugsweise wenigstens einen Referenzwert gespeichert, der ein Grenzfrequenz des Schwingungskörpers enthält, wenn der Füllstand das untere Ende des Schwingungskörpers erreicht hat oder eine vorgegebene Höhe an diesem hochgestiegen ist. Diese Frequenz wird als Referenzwert festgelegt und gespeichert. Die aktuelle Schwingungsfrequenz wird in der Auswerteeinrichtung dann mit dem Referenzwert verglichen, und wenn der Referenzwert erreicht bzw. überschritten wird, wird das Füllventil geschlossen.

Der Schwingungskörper kann kontinuierlich oder diskontinuierlich, z.B. in Pulsen in Schwingung versetzt werden. Bei diskontinuierlichem Betrieb sollten der Abstand zwischen den Pulsabständen der Anregungssignale der Anregungseinrichtung nicht größer als 100 ms, vorzugsweise nicht größer als 10 ms sein, damit eine gewünschte hohe Genauigkeit in der Füllhöheneinstellung erreicht wird.

Der Schwingungskörper wird vorzugsweise durch die Anregungseinrichtung in seiner Eigenresonanzfrequenz angeregt. Eine derartige Schwingung ist leicht induzierbar und in ihrer Frequenz sehr definiert. Diese Frequenz wird verändert, wenn der Füllstand den Schwingungskörper erreicht und an ihm hochsteigt.

Es ist selbstverständlich auch möglich, dass die Frequenz des Schwingungskörpers durch den Füllstand im Behälter beeinflusst wird. Daher kann in dem Referenzspeicher der Auswerteeinrichtung nicht nur ein definierter Frequenzwert gespeichert sein, sondern auch ein zeitlicher Frequenzverlauf, was die Auswertesicherheit des Füllstandssensors beträchtlich verbessert, weil dann nicht nur ein Frequenzsprung (wenn der Füllstand den Schwingungskörper erreicht hat) sondern auch der davor befindliche Frequenzverlauf ausgewertet wird. Über diesen kann es sogar möglich sein, eventuelle Defekte an der Flasche oder am Füllvorgang zu eruieren.

Vorzugsweise ist der Schwingungskörper ein elektromechanischer Wandler, zum Beispiel ein Piezoelement. Ein derartiges Piezoelement kann zum Beispiel durch Anlegen eines entsprechenden elektrischen Wechselfeldes leicht in Resonanzschwingung versetzt werden, wenn auf die elektrischen Anschlüsse, das heißt Anschlusselektroden des Piezoelements, eine entsprechende Anregungsspannung mit der erforderlichen Frequenz angelegt wird, z.B. in Pulsform. Auch die Auswerteeinrichtung kann mit denselben Anschlüssen verbunden sein, so dass alternierend angeregt und ausgewertet werden kann. In einer vorteilhaften Weiterbildung der Erfindung sind daher die Anregungseinrichtung als auch die Auswerteeinrichtung des Füllelements bzw. der Füllmaschine mit denselben elektrischen Anschlüssen des Piezoelements verbunden. Es ist natürlich auch möglich separate Elektroden an dem Piezoelement für die Auswertung vorzusehen.

Die Anregungseinrichtung und die Auswerteeinrichtung können in einer elektronischen Schaltung integriert sein, die entweder separat für jedes Füllelement ausgebildet ist oder die zentral in der Füllmaschine für eine Mehrzahl von Füllelementen vorgesehen ist, so dass die entsprechende Anregungseinrichtung und Auswerteeinrichtung multiplex arbeiten können muss.

Vorzugsweise ist der Schwingungskörper als Stab oder Gabel ausgebildet, was den Vorteil hat, dass er zum einen den Füllstrahl nicht nennenswert beeinträchtigt und dass zum anderen die Resonanzfrequenz eines derartigen Körpers sehr definiert ist.

In einer vorteilhaften Weiterbildung der Erfindung erstreckt sich der Schwingungskörper zentral unter der Abgabeöffnung, so dass er vollständig vom Füllstrahl umschlossen ist. Auf diese Weise werden während des ganzen Füllvorgangs definierte Umgebungs- und damit Schwingungsverhältnisse für den Schwingungskörper geschaffen, was geringe Abweichungen in der Schwingungsfrequenz beim Füllen mit sich bringt, besonders wenn er in Eigenresonanz schwingt.

Vorzugsweise erstreckt sich der Schwingungskörper senkrecht von der Abgabeöffnung nach unten, so dass er zum einen gut in den Behälter hineinragt und dort für die Füllstandsmessung geeignet ist als auch andererseits den Füllstrahl nicht wesentlich beeinträchtigt.

In einer vorteilhaften Weiterbildung der Erfindung ist der Schwingungskörper unterhalb des Produktkanals koaxial zu diesem angeordnet, so dass er von der aus der Abgabeöffnung austretenden Flüssigkeit, das heißt vom Füllstrahl, völlig umgeben ist. Dies führt zu definierten Schwingungsbedingungen beim Füllen und zu einer minimalen Beeinträchtigung des Füllstrahls.

In einer vorteilhaften Weiterbildung der Erfindung ist der Schwingungskörper von dem axial bewegbaren Ventilelement gehalten, das axial bewegbar in dem Produktkanal gehalten ist und mit einem am Produktkanal ausgebildeten Ventilsitz zusammenwirkt. Dadurch, dass der Schwingungskörper somit in dem Ventilelement aufgehängt ist, muss keine separate Aufhängung für den Schwingungskörper im oder unterhalb des Produktkanals vorgesehen werden. Der Schwingungskörper beeinträchtigt somit den Füllstrom im Produktkanal so gut wie überhaupt nicht und auch unterhalb des Produktkanals nur minimal. Auf diese Weise kann eine ausgezeichnete Füllstandsmessung bei hoher Füllleistung realisiert werden. Wie oben bereits ausgeführt wurde, ist vorzugsweise an dem Füllelement oder an einer Füllmaschine ein Referenzspeicher für einen Schwingungsverlauf und/oder eine Grenzschwingung vorgesehen und die Auswerteeinrichtung hat einen Komparator, der das beim Schwingungskörper gemessene Schwingungssignal mit dem gespeicherten Schwingungsverlauf oder der gespeicherten Grenzschwingung zur Ableitung eines Betätigungssignals für das Füllventil vergleicht. Auf diese Weise kann sehr zuverlässig erfasst werden, wenn der Füllstand im Behälter das untere Ende oder einen anderen definierten Punkt des Schwingungskörpers erreicht.

Vorzugsweise hat der Füllelementkörper an seiner Unterseite eine Anlagefläche für den Behälter, die somit eine Dichtfläche für eine Druckbefüllung bildet. In einer horizontalen Ebene ist der Schwingungskörper selbstverständlich innerhalb dieser Anlagefläche angeordnet und erstreckt sich unter die Anlagefläche, so dass er in die Behälteröffnung hineinragt.

In einer vorteilhaften Weiterbildung erstreckt sich daher der Schwingungskörper von dem Produktkanal bis unter die Abgabeöffnung.

Der Schwingungskörper ist im Füllstrahl angeordnet, so dass es möglich ist, über die Schwingung des Schwingungskörpers Unregelmäßigkeiten im Füllstrahl zu erfassen und auszuwerten.

Der Schwingungskörper, insbesondere wenn er als Piezoelement ausgebildet ist, kann somit ein starrer Körper sein. Es ist jedoch auch möglich, als Schwingungskörper einen sehr flexiblen Körper, wie zum Beispiel ein Band oder einen dickeren Faden, zu verwenden, dessen Schwingung durch einen Sensor, zum Beispiel einen optischen Sensor, oder falls es sich um ein ferromagnetisches Material handelt, einen Hall-Sensor erfasst werden kann. Wenn dieser Schwingungskörper ein derartiges flexibles Element ist, wird er bei der Anordnung im Füllstrahl in einer Eigenfrequenz vibrieren. Wenn hingegen der Füllstand das untere Ende dieses flexiblen Elements erreicht, wird diese Schwingung des flexiblen Elements stark verändert, was dann von dem optischen oder magnetischen oder sonstigen Näherungssensor erfasst werden kann. Zur Erfassung der Schwingung des flexiblen Elements kann selbstverständlich auch ein akustischer Sensor verwendet werden. Für das flexible Element kann natürlich auch ein polymerbasiertes piezoelektrisches Element verwendet werden, womit die Messung über die Kontaktelektroden des Piezoelements erfolgt. Hier ist dann keine Anregungseinrichtung notwendig.

Die Erfindung betrifft in gleicher Weise eine Füllmaschine, die mehrere Füllelemente der oben genannten Art aufweist. Insbesondere kann bei einer derartigen Füllmaschine die Auswerteeinrichtung und/oder die Anregungseinrichtung zentral für alle Füllelemente vorgesehen sein, entweder separat oder integriert in die Steuerung der Füllmaschine.

Die Erfindung betrifft in gleicher Weise ein Verfahren zur Füllstandsmessung eines von einem Füllelement befüllten Behälters gemäß Anspruch 19, wobei das Füllelement einen Produktkanal und ein darin ausgebildetes Füllventil aufweist, als auch eine Abgabeöffnung am unteren Ende des Produktkanals, durch welche eine abzufüllende Flüssigkeit in die Behälteröffnung eines unterhalb der Abgabeöffnung befindlichen Behälters einströmt. Im

Bereich unterhalb der Abgabeöffnung des Füllelements ist ein Schwingungskörper angeordnet, so dass er sich zumindest teilweise in die Behälteröffnung hineinerstreckt. Der Schwingungskörper wird zumindest während eines Füllvorgangs in Schwingungen versetzt, entweder durch eine Anregungseinrichtung oder durch den Füllstrahl der aus der Abgabeöffnung austretenden Flüssigkeit, welche Schwingungen von einer Messeinrichtung gemessen werden, wobei das Füllventil geschlossen wird, wenn eine vorgegebene Schwingungsänderung oder eine vorgegebene Änderung im zeitlichen Schwingungsverlauf eintritt oder überschritten wird.

Zu den Vorteilen dieses Verfahrens wird auf die obige Beschreibung des erfindungsgemäßen Füllelements Bezug genommen.

Vorzugsweise werden hierbei ein Referenz-Schwingungsverlauf und/oder eine Referenz-Grenzschwingung abgespeichert, und die gemessene Schwingung des Schwingungskörpers wird mit dem gespeicherten Referenz-Schwingungsverlauf oder der Referenz-Grenzschwingung verglichen. Das Füllventil wird geschlossen, wenn der Referenz-Schwingungsverlauf bzw. die Referenz-Grenzschwingung von der aktuellen Schwingung des Schwingungskörpers erreicht oder überschritten werden.

Es soll klargestellt sein, dass der Füllstandssensor nicht nur einen Schwingungskörper, sondern mehrere (z.B. parallele) Schwingungskörper aufweisen kann, um ein redundantes Messergebnis zu erzielen. Es ist weiterhin offensichtlich, dass der Schwingungskörper so im Füllstrahl angeordnet wird, dass er sich unter die Abgabeöffnung erstreckt derart, dass er in die Behälteröffnung eines in der Aufnahme des Füllelements befindlichen Behälters hineinragt. Insbesondere wird die anzustrebende Füllhöhe durch das untere Ende des Schwingungskörpers definiert, das heißt, der Füllvorgang wird gestoppt, sobald der Füllstand im Behälter das untere Ende des Schwingungskörpers erreicht hat. Es ist selbstverständlich auch möglich, den Füllvorgang erst zu stoppen, wenn der Füllstand erst auf einen gewissen Pegel im Bereich des Schwingungskörpers angestiegen ist, so dass zum Beispiel der Füllvorgang gestoppt werden kann, wenn der Schwingungskörper bereits 3 bis 15 mm in die eingefüllte Flüssigkeit eingetaucht ist. Da das zunehmende Eintauchen des Füllelements in die eingefüllte Flüssigkeit mit einer Schwingungsänderung verbunden ist, kann somit jeder Flüssigkeitsstand relativ zur Länge des Schwingungskörpers zur Initiierung des Schließens des Füllventils genutzt werden.

Die Erfindung wird nachfolgend beispielsweise anhand der schematischen Zeichnung beschrieben. In dieser zeigen:
- Fig. 1: eine erste Ausführungsform eines piezoelektrischen Füllelements,
- Fig. 2: eine zweite Ausführungsform eines gabelartigen piezoelektrischen Füllelements,
- Fig. 3 und 4: zwei weiteren Ausführungsformen eines piezoelektrischen Füllelements, wobei das Element als Schwingungs- oder Biegungsstreifen ausgebildet ist.

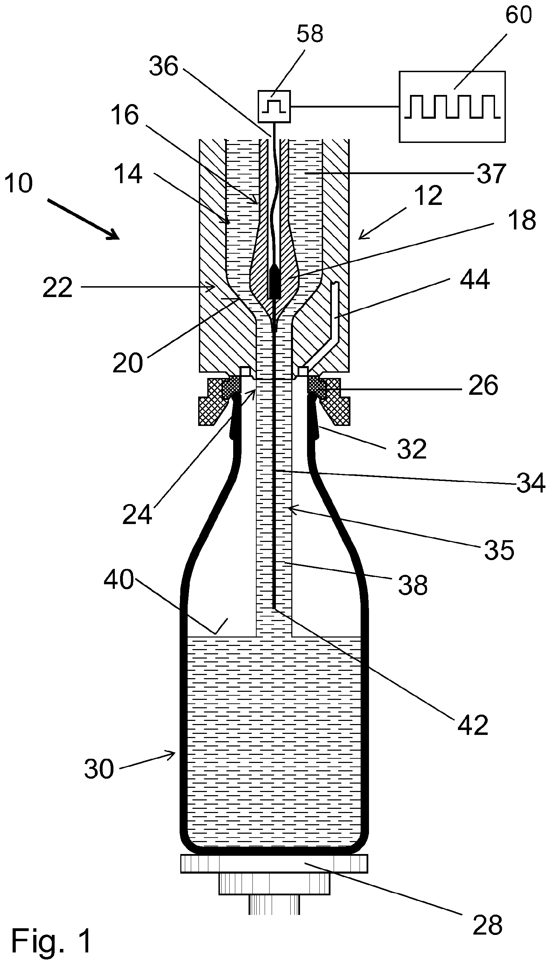

Fig. 1 zeigt ein Füllelement 10 mit einem länglichen Füllelementkörper 12, in welchem sich ein Produktkanal 14 erstreckt. Konzentrisch zu dem Produktkanal 14 ist ein Ventilelement 16 axial beweglich angeordnet, welches Ventilelement 16 an seinem unteren Ende einen verdickten Ventilkörper 18 hat, welcher mit einem Ventilsitz 20 in der dem Produktkanal bildenden Innenwandung des Füllelementkörpers 12 zusammenwirkt, um so ein Füllventil 22 zu bilden. An dem unteren Ende des Ventilkörpers 12 ist eine Abgabeöffnung 24 für das abzufüllende Füllgut, insbesondere Getränk, ausgebildet, als auch optional eine Anlage- bzw. Dichtfläche 26 zur dichten Anlage der Behälteröffnung 32 eines auf einer Aufnahme 28 des Füllelements 10 oder einer Füllmaschine. Am unteren Ende des Ventilelements 18 ist konzentrisch zu diesem ein Schwingungskörper 34 gehalten, welcher eine längliche Stabform hat. Der Schwingungskörper 34 erstreckt sich unterhalb der Abgabeöffnung 24 in den Behälter 30 hinein. Das Schwingungselement 34 ist vorzugsweise ein Piezoelement, welches über eine Anschlusskabel 36 mit einer kombinierten Anregungs- und Messeinrichtung 58 verbunden ist. Die Anregung und Messung der Schwingung des piezoelektrischen Schwingungskörpers 34 erfolgt alternierend in sehr kurzen Intervallen, insbesondere im Micro- bis Millisekundenbereich. Der Schwingungskörper bildet zusammen mit der Anregungs- und Messeinrichtung einen Füllstandssensor 35. Des Weiteren ist mit der Anregungs-/Messeinrichtung 58 eine Auswerteeinrichtung 60 verbunden, die entweder separat für das Füllelement 10 ausgebildet sein kann oder die zentral bei einer Füllmaschine angeordnet sein kann, die mehrere der dargestellten Füllelemente 10 aufweist. Des Weiteren ist in Fig. 1 ist mit dem Bezugszeichen 44 ein Rückgaskanal dargestellt, der ein Abfließen des im Behälter 30 befindlichen Luftvolumens ermöglicht, wenn der Behälter in Dichtlage z.B. mit einem CO₂-haltigen Getränk gefüllt wird.

Die Erfindung funktioniert wie folgt:
Zum Füllen eines Behälters 30 wird dieser in die in Fig. 1 dargestellte Füllposition gebracht, wobei er auf einer Aufnahme 28, die hier als Standfläche ausgebildet ist, aufsteht und in Dichtlage an der Anlage- oder Dichtfläche 26 an der Unterseite des Füllelementkörpers 12 anliegt. Dies erlaubt zum Beispiel ein Druckbefüllen des Behälters z.B. mit CO₂-haltigen Getränken im Freistrahlverfahren. Freistrahlverfahren bedeutet hierbei, dass der Füllstrahl nicht durch irgendwelche Leitelemente geführt ist bzw. an der Innenwand des Behälters entlanggeführt wird, sondern frei in den Behälter hineinströmt. Zum Befüllen des Behälters 30 wird der Ventilkörper 18 in die dargestellte Öffnungsstellung nach oben bewegt. Nun kann das Füllgut 37, welches horizontal schraffiert dargestellt ist, durch die Abgabeöffnung 24 als Füllstrahl 38 in den Behälter frei einströmen, wo das Füllgut einen der Dauer des Befüllungsvorgangs entsprechenden Füllspiegel 40 innerhalb des Behälters 30 einnimmt. Während des Füllens wird das Piezoelement 34 über die Anregungseinrichtung 58 kontinuierlich oder über kurze Anregungspulse in Resonanzschwingung versetzt. Wenn nun der Flüssigkeitsspiegel das untere Ende 42 des Schwingungskörpers bzw. Piezoelements 34 erreicht, ändert sich die Resonanzschwingung des Schwingungskörpers schlagartig.

Die Eigenschwingung des Schwingungskörpers wird über die Messeinrichtung 58 erfasst. Wenn nun der Füllspiegel 40 entlang der Höhe des Piezoelements 34 weiter ansteigt, ändert sich die Frequenz des Schwingungskörpers fortwährend. In der Auswerteeinrichtung 60 ist eine Referenzfrequenz abgespeichert, die einem gewünschten Füllstand 40 des Füllgutes innerhalb des Behälters 30 entspricht. Sobald die Schwingung des Piezoelements 34 diese Grenzfrequenz erreicht hat, bewirkt die Auswerteeinrichtung 60 ein Schließen des Füllventils 22, in dem das Ventilelement 18 und damit der Ventilkörper 18 gegen den Ventilsitz 20 bewegt wird. Auf diese Weise ist eine reproduzierbare Befüllung des Behälters mit einem gewünschten Füllstand möglich. Als Triggerpunkt für das Schließen des Füllventils kann hierbei füllstandmäßig das Erreichen des unteren Endes des Schwingungskörpers oder eine etwas höherer Füllstand entlang der Länge des Schwingungskörpers gewählt werden.

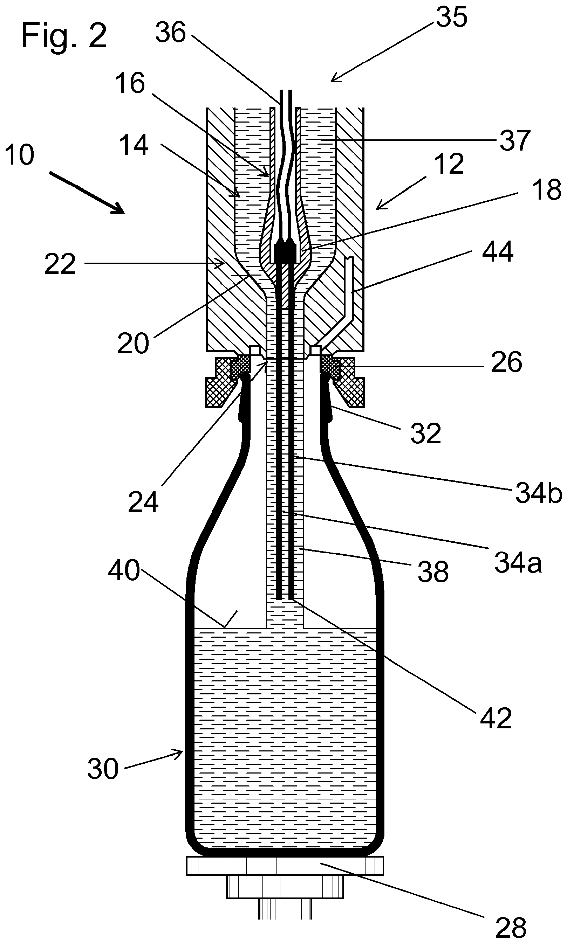

Fig. 2 zeigt eine alternative Ausbildungsform des erfindungsgemäßen Füllelements, wobei identische oder funktionsgleiche Teile mit den identischen Bezugszeichen versehen sind. Fig. 2 unterscheidet sich von Fig. 1 lediglich darin, dass hier zwei parallele Schwingungskörper 34a, 34b verwendet werden, die entweder alternierend oder gemeinsam angeregt und separat ausgewertet werden. Auf diese Weise wird eine redundante Messung erzielt, die die Aussagesicherheit des Füllstandssensors 35 erhöht.

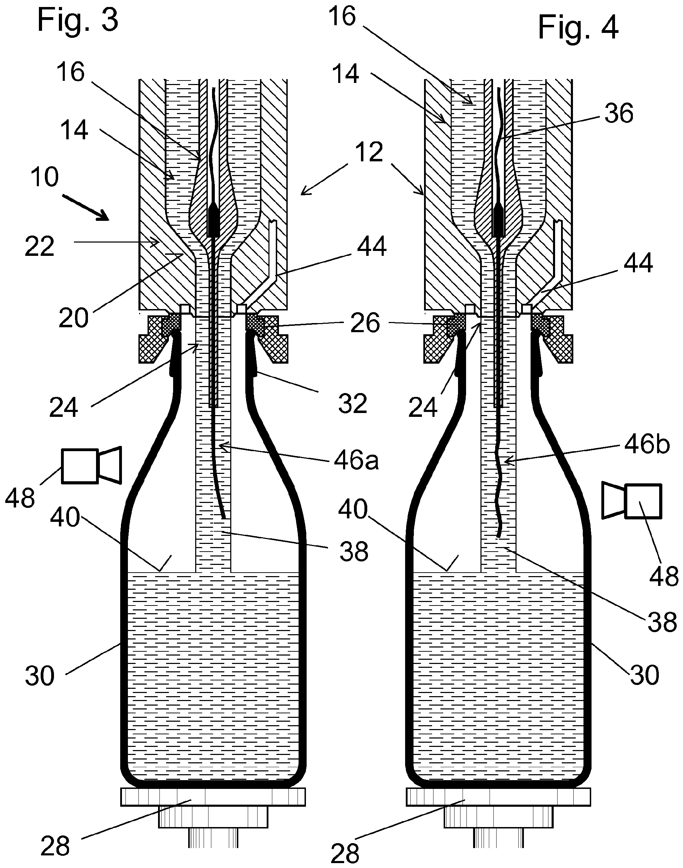

Schließlich zeigt Fig. 3 eine weitere Ausführungsform der Erfindung, bei welcher der Schwingungskörper als flexibles Element 46 ausgebildet ist.

Dieses flexible Element 46 kann entweder ein elektromechanischer Wandler sein, in welchem Fall die Messung der Schwingung wie in Fig. 1 und 2 stattfindet. Die Anregung kann durch den Füllstrahl 38 oder die Anregungseinrichtung 58 erfolgen. Alternativ ist es möglich, dass es sich hier um ein flexibles Element handelt, bei welchem eine Verformung zum Beispiel einen variablen elektrischen Widerstand oder Kapazität hervorruft. In diesem Fall wird das flexible Element 46 durch den vorbeifließenden Füllstrahl 38 in Schwingung versetzt und die Schwingung wird erfasst durch ein Anschlusskabel 36 in Verbindung mit der Messeinrichtung 58 oder durch eine separate Messeinrichtung 48, die zum Beispiel das Ende oder einen Bereich des flexiblen Elements überwacht. Die Messeinrichtung 48 kann ein optischer Sensor oder ein magnetischer Sensor sein oder ein beliebiger Sensor, der in der Lage ist, eine Bewegung des flexiblen Elements aufzunehmen. Die Messeinrichtung 48 kann auch zentral in der Aufnahme 28 angeordnet sein, so dass ihr Messstrahl senkrecht nach oben gegen das flexible Element 46 gerichtet ist. Das flexible Element kann weiterhin einfach ein Band oder dickerer Faden sein, dessen Bewegung durch die Messeinrichtung 48 erfasst wird.

Fig. 4 unterscheidet sich von Fig. 3 nur in der Ausbildung des flexiblen Elements, welches hier äußerst elastisch ist, so dass das flexible Element sich in eine Wellenform kräuselt, wenn der Füllstrahl an ihm entlangstreicht.

Die obigen Ausführungsformen der Erfindung sind nicht beschränkend für den Anmeldungsgegenstand. Dieser kann innerhalb des Schutzbereichs der beiliegenden Patentansprüche variiert werden.

Die Anregung des Schwingungskörpers muss nicht unbedingt durch eine separate Anregungseinrichtung erfolgen, sondern kann auch durch Medien erfolgen, die beim Befüllen in den Behälter hinein- bzw. aus dem Behälter hinaustreten. So kann zum Beispiel beim Anordnen eines flexiblen Schwingungskörpers im Füllstrahl dieser durch den Füllstrahl selbst in Schwingung versetzt werden.

### Bezugszeichenliste:

- 10: Füllelement
- 12: Füllelementkörper
- 14: Produktkanal
- 16: Ventilelement
- 18: Ventilkörper
- 20: Ventilsitz
- 22: Füllventil
- 24: Abgabeöffnung
- 26: Anlagefläche - Dichtfläche
- 28: Aufnahme - Standfläche
- 30: Behälter
- 32: Behälteröffnung
- 34: Schwingungskörper - Piezoelement
- 35: Füllstandssensor
- 36: Anschlusskabel
- 37: Füllgut
- 38: Füllstrahl (freifallend)
- 40: Füllstand
- 42: Unteres Ende des Schwingungskörpers
- 44: Rückgaskanal
- 46: Schwingungskörper - flexibles Element
- 48: optischer, akustischer oder magnetischer Sensor zur Messung der Bewegung des Schwingungskörpers
- 58: Messeinrichtung
- 60: Auswerteeinrichtung

## Patentansprüche

1. Füllelement (10) zum Befüllen von Behältern mit einer Flüssigkeit, umfassend einen Füllelementkörper (12) mit einem Produktkanal (14), in welchem ein Füllventil (22) ausgebildet ist, wobei am unteren Ende des Produktkanals (14) eine Abgabeöffnung (24) ausgebildet ist, bei welchem Füllelement des Weiteren unter der Abgabeöffnung (24) eine Aufnahme (28) für einen Behälter (30) ausgebildet ist, welches Füllelement (10) einen Füllstandssensor (35) aufweist, der sich zumindest teilweise vertikal unter die Abgabeöffnung (24) erstreckt, wobei das Füllventil (22) in Abhängigkeit von dem Signal des Füllstandssensors (35) betätigbar ist,
wobei der Füllstandssensor (35) einen Schwingungskörper (34; 46) aufweist, als auch eine Messeinrichtung (48, 58) um die Schwingung des Schwingungskörpers (34; 46) zu messen, **dadurch gekennzeichnet, dass** der Füllstandssensor (35) so positioniert ist, dass der Schwingungskörper (34; 46) in einem aus der Abgabeöffnung (24) austretenden Füllstrahl (38) angeordnet ist.

2. Füllelement (10) nach Anspruch 1, **dadurch gekennzeichnet, dass** es eine Anregungseinrichtung (58) aufweist, um den Schwingungskörper (34; 46) in Schwingung zu versetzen.

3. Füllelement (10) nach Anspruch 2, **dadurch gekennzeichnet, dass** die Anregungseinrichtung (58) konzipiert ist, den Schwingungskörper (34; 46) in einer Eigenresonanzfrequenz anzuregen.

4. Füllelement (10) nach einem der vorhergehenden Ansprüche, **dadurch gekennzeichnet, dass** der Schwingungskörper (34; 46) ein elektromechanischer Wandler, insbesondere ein Piezoelement ist.

5. Füllelement (10) nach Anspruch 4, **dadurch gekennzeichnet, dass** die Anregungseinrichtung (58) und die Auswerteeinrichtung (60) mit elektrischen Anschlüssen (36) des Piezoelements (34; 46) verbunden sind.

6. Füllelement (10) nach Anspruch 4 oder 5, **dadurch gekennzeichnet, dass** die Anregungseinrichtung und die Auswerteeinrichtung in einer elektronischen Schaltung (58) integriert sind.

7. Füllelement (10) nach einem der vorhergehenden Ansprüche, **dadurch gekennzeichnet, dass** der Schwingungskörper (34; 46) als Stab oder Gabel ausgebildet ist.

8. Füllelement (10) nach einem der vorhergehenden Ansprüche, **dadurch gekennzeichnet, dass** der Schwingungskörper (34; 46) sich koaxial zum Produktkanal (14) unter der Abgabeöffnung (24) erstreckt.

9. Füllelement (10) nach einem der vorhergehenden Ansprüche, **dadurch gekennzeichnet, dass** der Schwingungskörper (34; 46) sich senkrecht erstreckt.

10. Füllelement (10) nach einem der vorhergehenden Ansprüche, **dadurch gekennzeichnet, dass** der Schwingungskörper (34; 46) unterhalb des Produktkanals (14) derart angeordnet ist, dass er von dem aus der Abgabeöffnung (24) austretenden Füllstrahl (38) völlig umgegeben ist.

11. Füllelement (10) nach einem der vorhergehenden Ansprüche, **dadurch gekennzeichnet, dass** der Schwingungskörper (34; 46) an einem Ventilelement (16) gehalten ist, dass axial bewegbar in dem Produktkanal (14) gehalten ist.

12. Füllelement (10) nach einem der vorhergehenden Ansprüche, **dadurch gekennzeichnet, dass** die Messeinrichtung (38) mit einer Auswerteeinrichtung (60) verbunden ist, die einen Referenzspeicher für einen Schwingungsverlauf und/oder eine Grenzschwingung aufweist, und dass die Auswerteeinrichtung (60) einen Komparator aufweist, der das gemessen Schwingungssignal mit dem gespeicherten Schwingungsverlauf oder der Grenzschwingung zur Ableitung eines Betätigungssignals für das Füllventil (22) vergleicht.

13. Füllelement (10) nach einem der vorhergehenden Ansprüche, **dadurch gekennzeichnet, dass** sich der Schwingungskörper (34; 46) von dem Produktkanal (14) bis unter die Abgabeöffnung (24) erstreckt.

14. Füllelement (10) nach einem der vorhergehenden Ansprüche, **dadurch gekennzeichnet, dass** am unteren Ende des Füllelementkörpers (12) ein Anlagebereich (26) für eine Behälteröffnung (32) eines in der Aufnahme (28) aufgenommenen Behälters (30) angeordnet ist, und dass der Schwingungskörper (34; 46) in einer horizontalen Ebene innerhalb des Anlagebereichs (26) angeordnet ist und sich vertikal unter den Anlagebereich (26) erstreckt.

15. Füllelement (10) nach einem der Ansprüche 1 bis 3, **dadurch gekennzeichnet, dass** der Schwingungskörper (46) ein in der horizontalen Ebene innerhalb der Abgabeöffnung (24) angeordnetes flexibles Element ist, dessen Schwingung von der Messeinrichtung (38; 48) erfasst wird.

16. Füllelement (10) nach Anspruch 15, **dadurch gekennzeichnet, dass** die Messeinrichtung ( 48) einen optischen oder akustischen Sensor (48) zur Erfassung der Schwingung des flexiblen Elements (46) aufweist.

17. Füllmaschine, umfassend mehrere Füllelemente (10) nach einem der vorhergehenden Ansprüche.

18. Füllmaschine nach Anspruch 17, **dadurch gekennzeichnet, dass** die Messeinrichtungen (48, 58) der Füllelemente (10) mit einer in Verbindung mit einer zentralen Füllmaschinensteuerung angeordneten zentralen Auswerteeinrichtung (40) verbunden sind, welche die Füllventile (22) der einzelnen Füllelemente (10) steuert.

19. Verfahren zur Füllstandsmessung eines von einem Füllelement (10) befüllten Behälters (30), wobei das Füllelement (10) einen Produktkanal (14) und ein darin ausgebildetes Füllventil (22) aufweist, als auch eine Abgabeöffnung (24) am unteren Ende des Produktkanals (14) durch welche eine abzufüllende Flüssigkeit in die Behälteröffnung (32) eines unterhalb der Abgabeöffnung (24) befindlichen Behälters (30) einströmt, wobei ein Schwingungskörper (34; 46) im Bereich unterhalb der Abgabeöffnung (24) des Füllelements (10) angeordnet wird, so dass er sich zumindest teilweise in die Behälteröffnung (32) hineinerstreckt, welcher Schwingungskörper (34; 46) zumindest während eines Füllvorgangs in Schwingungen versetzt wird, welche Schwingungen gemessen (48, 58) werden, wobei das Füllventil (22) geschlossen wird, wenn eine vorgegebene Schwingungsänderung oder eine vorgegebene Änderung im Schwingungsverlauf eintritt, **dadurch gekennzeichnet, dass** der Schwingungskörper (34; 46) in einem aus der Abgabeöffnung (24) austretenden Füllstrahl (38) angeordnet ist.

20. Verfahren nach Anspruch 19, **dadurch gekennzeichnet, dass** ein Referenz-Schwingungsverlauf und/oder eine Referenz-Grenzschwingung abgespeichert werden, und das die gemessene Schwingung des Schwingungskörpers (34; 46) mit dem gespeicherten Referenz-Schwingungsverlauf oder der Referenz-Grenzschwingung verglichen werden, und dass das Füllventil (22) geschlossen wird, wenn der Referenz-Schwingungsverlauf bzw. die Referenz-Grenzschwingung erreicht bzw. überschritten werden.

## Claims

1. Filling element (10) for filling containers with a liquid, comprising a filling element body (12) with a product channel (14), in which a filling valve (22) is formed, wherein a dispensing opening (24) is formed at the lower end of the product channel (14), with which filling element, in addition, a retainer (28) for a container (30) is formed below the dispensing opening (24), said filling element (10) comprising a level sensor (35), which extends at least partially vertically below the dispensing opening (24), wherein the filling valve (22) can be activated in accordance with the signal from the level sensor (35), wherein the level sensor (35) comprises an oscillating body (34; 46) as well as a measuring device (48, 58) in order to measure the oscillation of the oscillating body (34; 46), **characterised in that** the level sensor (35) is positioned in such a way that the oscillating body (34; 46) is arranged in a filling flow (38) emerging from the dispensing opening (24).

2. Filling element (10) according to claim 1, **characterised in that** it comprises an excitation device (58) in order to set the oscillating body (34; 46) into oscillation.

3. Filling element (10) according to claim 2, **characterised in that** the excitation device (58) is designed such as to excite the oscillating body (34; 46) in a self-resonance frequency.

4. Filling element (10) according to any of the preceding claims, **characterised in that** the oscillating body (34; 46) is an electromechanical transformer, in particular a piezo element.

5. Filling element (10) according to claim 4, **characterised in that** the excitation device (58) and the evaluation device (60) are connected by electrical connections (36) of the piezo element (34; 46).

6. Filling element (10) according to claim 4 or 5, **characterised in that** the excitation device and the evaluation device are integrated in an electrical circuit (58).

7. Filling element (10) according to any of the preceding claims, **characterised in that** the oscillating body (34; 46) is configured as a rod or fork.

8. Filling element (10) according to any of the preceding claims, **characterised in that** the oscillating body (34; 46) extends coaxially to the product channel (14) below the dispensing opening (24).

9. Filling element (10) according to any of the preceding claims, **characterised in that** the oscillating body (34; 46) extends perpendicularly.

10. Filling element (10) according to any of the preceding claims, **characterised in that** (the) oscillating body (34; 46) is arranged below the product channel (14) in such a way that it is surrounded by the filling flow (38) emerging from the dispensing opening (24).

11. Filling element (10) according to any of the preceding claims, **characterised in that** the oscillating body (34; 46) is held at a valve element (16) which is held in the product channel (14) such that it can move axially.

12. Filling element (10) according to any of the preceding claims, **characterised in that** the measuring device (38) is connected to an evaluation device (60), which comprises a reference memory for an oscillation path and/or a limit oscillation, and that the evaluation device (60) comprises a comparator, which compares the measured oscillation signal with the stored oscillation path or limit oscillation, in order to derive an actuation signal for the filling valve (22).

13. Filling element (10) according to any of the preceding claims, **characterised in that** the oscillating body (34; 46) extends from the product channel (14) as far as below the dispensing opening (24).

14. Filling element (10) according to any of the preceding claims, **characterised in that** a contact region (26) is arranged at the lower end of the filling element body (12), for a container opening (32) of a container (30) received in the receiver (28), and that the oscillating body (34; 46) is arranged in a horizontal plane inside the contact region (26) and extends vertically below the contact region (26).

15. Filling element (10) according to any of claims 1 to 3, **characterised in that** the oscillating body (46) is a flexible element arranged in the horizontal plane inside the dispensing opening (24), of which the oscillation is detected by the measuring device (38; 48).

16. Filling element (10) according to claims 15, **characterised in that** the measuring device (48) comprises an optical sensor (48) for detecting the oscillation of the flexible element (46).

17. Filling machine, comprising filling elements (10) according to any one of the preceding claims.

18. Filling machine according to claim 17, **characterised in that** the measuring devices (48, 58) of the filling elements (10) are connected to a central evaluation device (40) which is arranged in connection with a central filling machine control device, which controls the filling valves (22) of the individual filling elements (10).

19. Method for measuring the level of a container (30) being filled by a filling element (10), wherein the filling element (10) comprises a product channel (14) and a filling valve (22) formed therein, as well as a dispensing opening (24) at the lower end of the product channel (14), through which a liquid which is to be filled flows into the container opening (32) of a container (30) located below the dispensing opening (24), wherein an oscillating body (34; 46) is arranged in the region below the dispensing opening (24) of the filling element (10), such that it extends at least partially into the container opening (32), said oscillating body (34; 46) being set in oscillation at least during a filling process, and said oscillations (48, 58) are measured, wherein the filling valve (22) is closed if a predetermined change in the oscillation or a predetermined change in the oscillation path occur, **characterised in that** the oscillating body (34; 46) is arranged in a filling flow (38) emerging from the dispensing opening (24).

20. Method according to claim 19, **characterised in that** a reference oscillation path and/or a reference limit oscillation are stored in a memory, and that the measured oscillations of the oscillating body (34; 46) are compared with the stored reference oscillation path or the reference limit oscillation, and that the filling valve (22) is closed if the reference oscillation path or the reference limit oscillation are reached or exceeded.

## Revendications

1. Elément de remplissage (10) pour remplir des contenants d'un liquide, comprenant un corps d'élément de remplissage (12) avec un canal de produit (14), dans lequel est réalisée une soupape de remplissage (22), dans lequel une ouverture de distribution (24) est réalisée sur l'extrémité inférieure du canal de produit (14), dans lequel élément de remplissage par ailleurs un logement (28) pour un contenant (30) est réalisé sous l'ouverture de distribution (24), lequel élément de remplissage (10) présente un capteur de niveau de remplissage (35), qui s'étend au moins en partie verticalement sous l'ouverture de distribution (24), dans lequel la soupape de remplissage (22) peut être actionnée en fonction du signal du capteur de niveau de remplissage (35),
dans lequel le capteur de niveau de remplissage (35) présente un corps oscillant (34 ; 46), ainsi qu'un dispositif de mesure (48, 58) pour mesurer l'oscillation du corps oscillant (34 ; 46), **caractérisé en ce que** le capteur de niveau de remplissage (35) est positionné de telle sorte que le corps oscillant (34 ; 46) est disposé dans un jet de remplissage (38) sortant de l'ouverture de distribution (24).

2. Elément de remplissage (10) selon la revendication 1, **caractérisé en ce qu'**il présente un dispositif d'excitation (58) pour amener le corps oscillant (34 ; 46) en oscillation.

3. Elément de remplissage (10) selon la revendication 2, **caractérisé en ce que** le dispositif d'excitation (58) est conçu pour exciter le corps oscillant (34 ; 46) dans une fréquence de résonance propre.

4. Elément de remplissage (10) selon l'une quelconque des revendications précédentes, **caractérisé en ce que** le corps oscillant (34 ; 46) est un convertisseur électromécanique, en particulier un élément piézoélectrique.

5. Elément de remplissage (10) selon la revendication 4, **caractérisé en ce que** le dispositif d'excitation (58) et le dispositif d'évaluation (60) sont reliés à des raccords (36) électriques de l'élément piézoélectrique (34 ; 46).

6. Elément de remplissage (10) selon la revendication 4 ou 5, **caractérisé en ce que** le dispositif d'excitation et le dispositif d'évaluation sont intégrés dans un circuit (58) électronique.

7. Elément de remplissage (10) selon l'une quelconque des revendications précédentes, **caractérisé en ce que** le corps oscillant (34 ; 46) est réalisé en tant que barre ou fourche.

8. Elément de remplissage (10) selon l'une quelconque des revendications précédentes, **caractérisé en ce que** le corps oscillant (34 ; 46) s'étend de manière coaxiale par rapport au canal de produit (14) sous l'ouverture de distribution (24).

9. Elément de remplissage (10) selon l'une quelconque des revendications précédentes, **caractérisé en ce que** le corps oscillant (34 ; 46) s'étend de manière perpendiculaire.

10. Elément de remplissage (10) selon l'une quelconque des revendications précédentes, **caractérisé en ce que** le corps oscillant (34 ; 46) est disposé sous le canal de produit (14) de telle manière qu'il est entouré en totalité par le jet de remplissage (38) sortant de l'ouverture de distribution (24).

11. Elément de remplissage (10) selon l'une quelconque des revendications précédentes, **caractérisé en ce que** le corps oscillant (34 ; 46) est maintenu sur un élément de soupape (16), qui est maintenu de manière à pouvoir être déplacé axialement dans le canal de produit (14).

12. Elément de remplissage (10) selon l'une quelconque des revendications précédentes, **caractérisé en ce que** le dispositif de mesure (38) est relié à un dispositif d'évaluation (60), qui présente une mémoire de référence pour une évolution d'oscillation et/ou une oscillation limite, et
**que** le dispositif d'évaluation (60) présente un comparateur qui compare le signal d'oscillation mesuré à l'évolution d'oscillation mémorisée ou à l'oscillation limite pour déduire un signal d'actionnement pour la soupape de remplissage (22).

13. Elément de remplissage (10) selon l'une quelconque des revendications précédentes, **caractérisé en ce que** le corps oscillant (34 ; 46) s'étend depuis le canal de produit (14) jusque sous l'ouverture de distribution (24).

14. Elément de remplissage (10) selon l'une quelconque des revendications précédentes, **caractérisé en ce qu'**une zone d'appui (26) pour une ouverture de contenant (32) d'un contenant (30) logé dans le logement (28) est disposée sur l'extrémité inférieure du corps d'élément de remplissage (12), et que le corps oscillant (34 ; 46) est disposé dans un plan horizontal à l'intérieur de la zone d'appui (26) et s'étend de manière verticale sous la zone d'appui (26).

15. Elément de remplissage (10) selon l'une quelconque des revendications 1 à 3, **caractérisé en ce que** le corps oscillant (46) est un élément flexible disposé dans le plan horizontal à l'intérieur de l'ouverture de distribution (24), dont l'oscillation est détectée par le dispositif de mesure (38 ; 48).

16. Elément de remplissage (10) selon la revendication 15, **caractérisé en ce que** le dispositif de mesure (48) présente un capteur optique ou acoustique (48) pour détecter l'oscillation de l'élément flexible (46).

17. Remplisseuse comprenant plusieurs éléments de remplissage (10) selon l'une quelconque des revendications précédentes.

18. Remplisseuse selon la revendication 17, **caractérisée en ce que** les dispositifs de mesure (48, 58) des éléments de remplissage (10) sont reliés à un dispositif d'analyse (40) central disposé en liaison avec une commande centrale de remplisseuse, lequel commande les soupapes de remplissage (22) des divers éléments de remplissage (10).

19. Procédé de mesure de niveau de remplissage d'un contenant (30) rempli par un élément de remplissage (10), dans lequel l'élément de remplissage (10) présente un canal de produit (14) et une soupape de remplissage (22) réalisée dans celui-ci, ainsi qu'une ouverture de distribution (24) sur l'extrémité inférieure du canal de produit (14), par laquelle un liquide à transvaser afflue dans l'ouverture de contenant (32) d'un contenant (30) se trouvant sous l'ouverture de distribution (24), dans lequel un corps oscillant (34 ; 46) est disposé dans la zone sous l'ouverture de distribution (24) de l'élément de remplissage (10) de sorte qu'il s'étend au moins en partie à l'intérieur de l'ouverture de contenant (32), lequel corps oscillant (34 ; 46) est amené au moins au cours d'une opération de remplissage en oscillations, lesquelles oscillations sont mesurées (48, 58), dans lequel la soupape de remplissage (22) est fermée quand une modification d'oscillation prédéfinie ou une modification prédéfinie dans la variation d'oscillation survient, **caractérisé en ce que** le corps oscillant (34 ; 46) est disposé dans un jet de remplissage (38) sortant de l'ouverture de distribution (24).

20. Procédé selon la revendication 19, **caractérisé en ce qu'**une évolution d'oscillation de référence et/ou une oscillation limite de référence sont sauvegardées, et que l'oscillation mesurée du corps oscillant (34 ; 46) est comparée à l'évolution d'oscillation de référence mémorisée ou à l'oscillation limite de référence, et que la soupape de remplissage (22) est fermée quand l'évolution d'oscillation de référence ou l'oscillation limite de référence sont atteintes ou dépassées.
